Europäisches Patentamt

European Patent Office

Office européen des brevets

(19)

(11) EP 0 813 006 A2

(12) EUROPEAN PATENT APPLICATION

(43) Date of publication:
17.12.1997 Bulletin 1997/51

(51) Int. Cl.$^6$: F16H 63/02

(21) Application number: 97109190.5

(22) Date of filing: 06.06.1997

(84) Designated Contracting States:
AT BE CH DE DK ES FI FR GB GR IE IT LI LU MC NL PT SE

(30) Priority: 12.06.1996 IT TO960507

(71) Applicant:
C.R.F. Societa' Consortile per Azioni
10043 Orbassano (Torino) (IT)

(72) Inventors:
• Mesiti, Domenico
10040 Leini' (Torino) (IT)

• Caenazzo, Dario
10060 Scalenghe (Torino) (IT)
• Garabello, Marco
10060 Scalenghe (Torino) (IT)

(74) Representative:
Di Francesco, Gianni et al
Ing. Barzanò & Zanardo Milano S.p.A.
Corso Vittorio Emanuele II, 61
10128 Torino (IT)

(54) **Electro-hydraulic device for controlling gear selection in a servo-controlled gearbox**

(57) In an electro-hyraulic device for controlling gear selection in a motorcar servo-controlled gearbox having at least four positions for gear selection, delivery of a pressurised fluid to working chambers provided in an actuator for controlling the translation of a gearbox control shaft (2) is selectively controlled by on-off valves in response to signals coming from a control processing unit. The actuator has only two control chambers (38, 52) controlled by only two three-way on-off solenoid valves (58, 60).

FIG.1

## Description

The present invention refers to an electro-hyraulic device for controlling gear selection in a motorcar servo-controlled gearbox, particularly a gearbox having four gear selection positions.

Presently known driving devices for gear selection, used in combination with a servo-control for gear engagement in a servo-controlled gearbox, require the use of a minimum of three on-off valves in the control circuit in order to have the possibility of controlling four positions for gear selection. This involves rather high manufacturing costs for the control circuit.

It is an object of the present invention to provide a gear selection actuator device capable of controlling at least four positions for gear selection and making use of more simple and cost-effective control circuit.

In accordance with one aspect of the invention as claimed, this object is accomplished by the provision of an electro-hyraulic device for controlling gear selection in a motorcar servo-controlled gearbox having at least four positions for gear selection, of the type wherein delivery of a pressurised fluid to working chambers provided in an actuator for controlling the translation of a gearbox control shaft is selectively controlled by on-off valves in response to signals coming from a control processing unit, characterised in that said actuator has only two control chambers controlled by only two three-way on-off solenoid valves.

In accordance with a further, advantageous feature of the present invention, the actuator is disposed coaxial to the gearbox control shaft.

The characteristics of a preferred but not limiting embodiment of the device according to the invention are described hereinafter with reference to the accompanying drawings, in which:

FIG. 1     is a partial cross sectional view schematically showing the device of this invention fitted directly at one end of a gear selection and engagement control shaft;

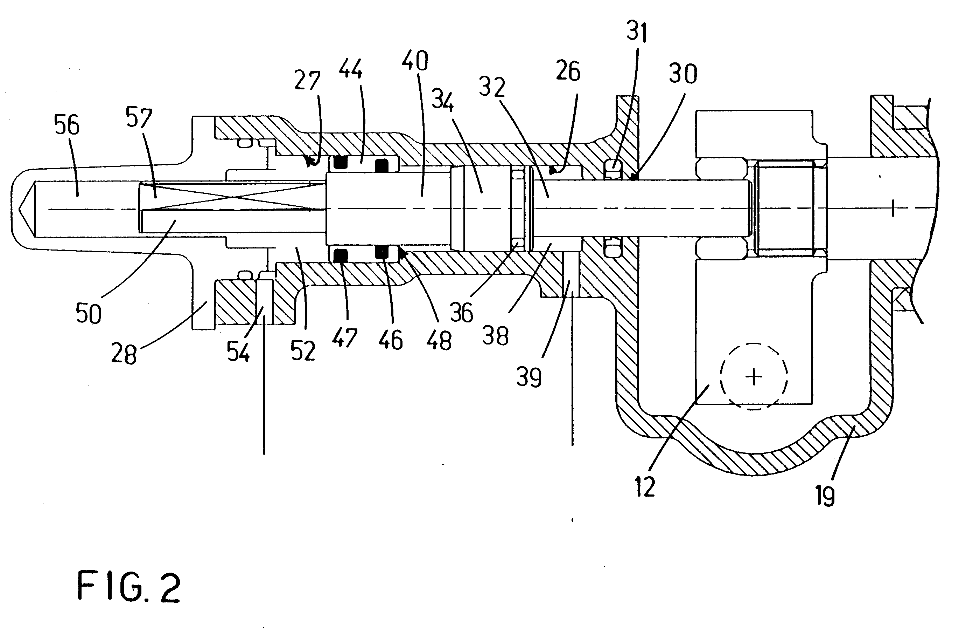

FIG. 2     is an enlarged view of a detail of FIG. 1; and

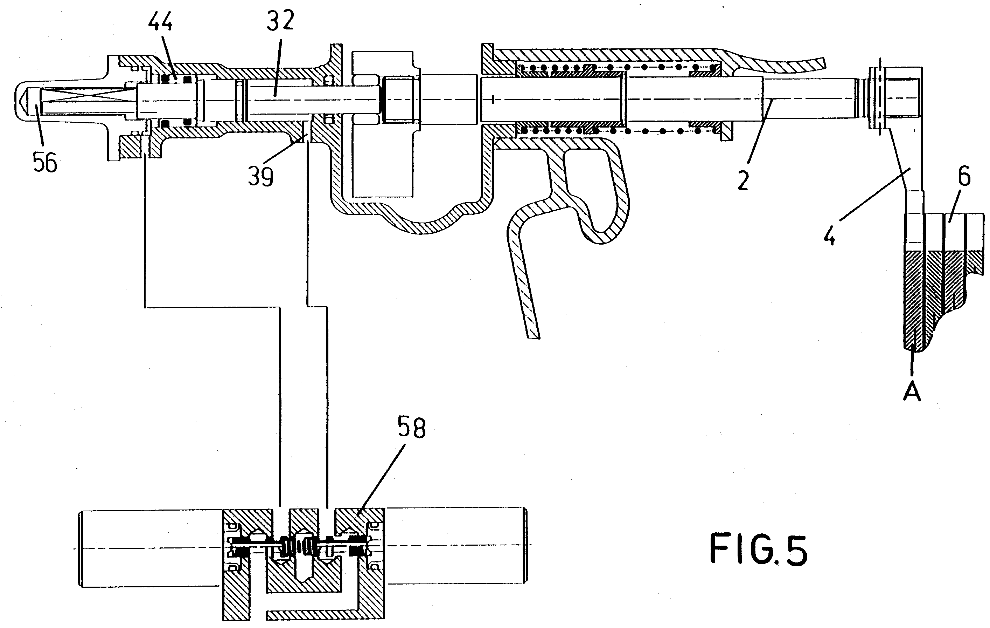

FIGS. 3 to 5     show other positions reached during operation of the control shaft of FIG. 1.

With reference to the drawings, numeral 1 designates part of a gearbox housing in which a cylindrical control shaft 2 is inserted for selecting and engaging gears. Control shaft 2 is provided with a lever 4 adapted for contacting overlapping driving recessed portions 6. Said recessed portions 6 are formed in corresponding radial projections integral with parallel rods slidably mounted within the gearbox and carrying fork members for controlling gear engagement. Each of these fork-fitted rods is adapted to control the engagement of no more than two speeds.

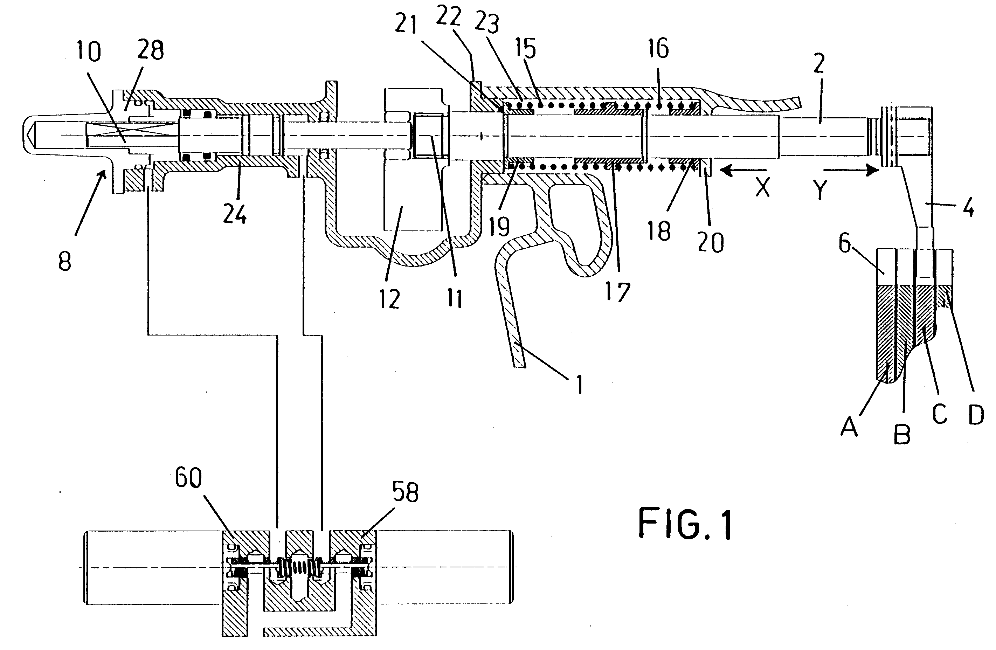

Therefore, with a six speed plus reverse gear gearbox as in the example illustrated, at least four sliding rods and relevant fork members must be provided. Each rod can be shifted in both opposite ways with respect to a central neutral position, to first and second operational positions each corresponding to the insertion of one of the two gears, respectively. In particular, in the illustrated example, one of the two four rods is shiftable from a non operational position to a reverse gear engagement position, and vice versa. Therefore, there are provided four radial projections with relevant overlapping recessed portions 6 integral to the four rods. Each radial projection can be selected by axially sliding the cylindrical shaft 2 in the directions of arrows X, Y (FIG. 1) so as to bring the lever 4 to the selected recessed portion 6.

In accordance with the present invention, there is provided a hydraulic actuator 8 adapted for axially shifting the shaft 2, using the free end portion 10 of the shaft 2 extending from the gearbox housing 1 as the piston of said actuator. A lever 12 is keyed on a length 11 of the shaft portion extending from the gearbox. Said lever has the function of rotating the shaft 2 in order to engage the previously selected gear, in accordance with the controls transmitted to the gear engagement actuator via the control processing unit where a servo-control device is provided.

Obviously, the actuator piston 10 can be suitably assembled and mounted separately and then secured to the shaft 2.

In the illustrated example, the top one A of the four recessed portions available corresponds to the reverse gear rod, the second recessed portion B corresponds to the fifth and sixth speed rod, the third recessed portion C to the third and fourth speed rod, and the fourth recessed portion D to the first and second speed rod. The positions may naturally be chosen in a different manner depending on design requirements. The lever 4 in a rest position, i.e. in the gearbox neutral position, is kept at the recessed portion C by a pair of centring springs 15, 16 acting on a central bushing 17 keyed onto the shaft 2 and on two side bushings 18, 19. On one side, the side bushings 18, 19 react on a protrusion 20 formed on the gearbox housing 1; on the other side, said bushings react against a shoulder 21 of shaft 2 and simultaneously, when shaft 2 is in its neutral position during operation, against a plug 22 closing the bore 23 through which the shaft comes out of gearbox housing 1.

The plug 22 is prolonged to form the outer body of a master cylinder 24. As previously stated, the piston 10 of this cylinder is constituted by the end portion of shaft 2, and is therefore disposed coaxial thereto. Said outer body is provided with an axial bore having a first portion 26 and a second portion 27 of greater diameter than the first one. The second portion 27 is closed by a plug 28. A passage 30 sealed by a gasket 31 lets the piston 10 out of said axial bore. Starting from the passage 30, the piston 10 has a first length 32 of a diameter corresponding to that of said passage 30 and smaller than the diameter of the first portion 26 of the axial bore. A second length 34, immediately following the first length and provided with a sealing gasket 36 has a diameter substantially equal to that of the first portion 26 of the axial bore and defines therewith a first working chamber 38 having a fluid passage 39.

The diameter of a third length 40 is smaller than that of the second length 34, but larger than that of the first length 32. In the resting condition of actuator cylinder 24, the third length 40 extends in the second portion 27 of the axial bore. The part of the third length 40 within bore 27 is surrounded by a second piston 44 of annular shaped cross section, the inner diameter of which corresponds to the outer diameter of the third length 40, while its outer diameter equals that of bore portion 27. The second piston 44 is slidably mounted within the wider bore portion 27 and is fitted with peripheral sealing gaskets 46, 47 on its inner and outer cylindrical walls.

In its resting position, the second piston 44 rests against a shoulder 48 formed by the difference in diameter of the two axial bore portions 26 and 27. A fourth, centring length 50 extends into a second working chamber 52 defined between the plug 28 and the walls of the bore portion 27 and having a fluid passage 54. The plug 28 forms an axial recess 56 in which the fourth length 50 can insert in its axial displacements. The fourth length 50 has a flat surface 57 to allow communication between the recess 56 and the chamber 52.

As shown in FIG. 1, the two working chambers 38 and 52 are connected via passages 39 and 54 to first and second three-way on-off solenoid valves 58, 60. Said solenoid valves are in turn in communication with a pressurised fluid source or, alternatively, a drain reservoir (not shown). Said valves are activated by a control processing unit in response to signals transmitted by the gear lever or directly by the same control processing unit, in the case of a completely automatic gearbox.

Operation of the device is as follows.

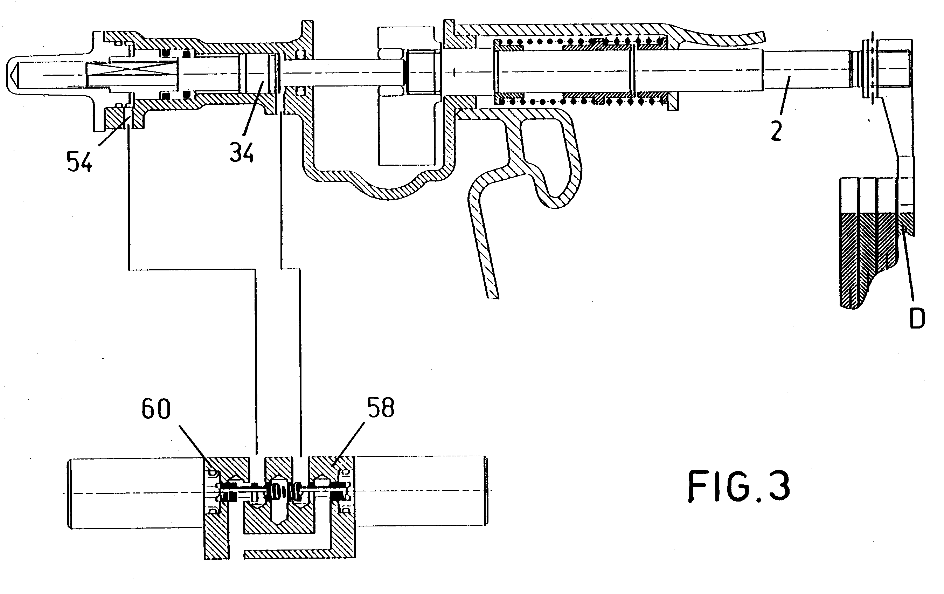

When a gear is to be engaged, for example the first or second gear, the shaft 2 has to be translated in the direction of arrow Y (FIG. 1). This causes lever 4 to fit into the lower recessed portion D corresponding to the rod of said first or second gear (FIG. 3). Then, the shaft 2 is rotated by lever 12 to engage the desired gear.

Translation of piston 10, until bushings 17 and 18 come into abutment, is attained by activating solenoid valve 60 and thereby sending pressurised fluid to the second chamber 52 while keeping the first chamber 38 in fluid communication with the drain.

The position of lever 4 corresponding to the seat C of the third and fourth gears (FIG. 1), is reached, as said, by means of centring springs 15 and 16. As a result, the solenoid valves keep both chambers 38 and 52 in a discharged condition.

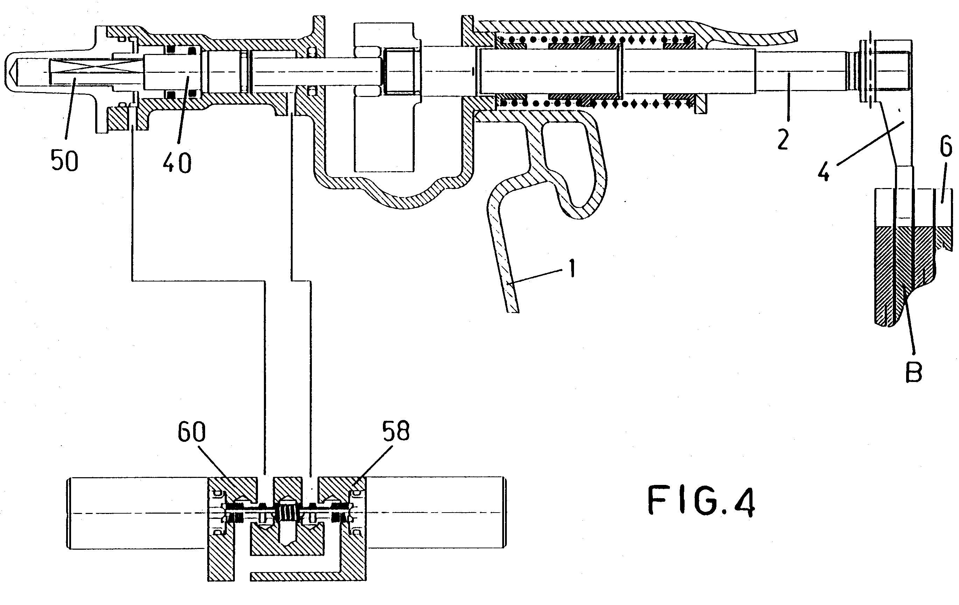

The position of lever 4 corresponding to seat B (FIG. 4) of the fifth and sixth gears, is reached by sending pressurised fluid into both chambers 38 and 52, i.e. by activating both solenoid valves 58 and 60.

Owing to the different areas on which the pressurised fluid acts, the piston 10 will shift in the direction of arrow X until the front wall of the second length 34 abuts against the piston 44. At this point, the ratio between the two areas acted upon is reversed, and piston 10 remains in the position it has reached until valves 58 and 60 are activated.

Designated with d is the diameter of the first length 32, D being the diameter of the second length 34, $d_1$ being the diameter of the third length 40 and $D_1$ the diameter of the second axial bore portion 27; the following relation is

$$\text{set: } (D^2 - d^2)\,\pi/4 > d_1{}^2\,\pi/4;$$

$$\text{but: } (D^2 - d^2)\,\pi/4 < D_1{}^2\,\pi/4.$$

Clearly, the diameters and lengths of the various lengths of end portion 10 will have to be suitably dimensioned so as to attain a precise positioning of lever 4 with respect to the recessed portions 6.

The fourth position of radial projection 4, corresponding to seat A used for selecting the reverse gear, is reached by sending pressurised fluid in chamber 38 and discharging chamber 52. In this way the piston 10 will translate completely in the direction of arrow X, driving the second piston 44 with it, until the bushings 17 and 19 come into abutment with each other.

The advantages attained by the afore described device will be apparent. The device allows to make use of only two on-off solenoid valves for controlling four positions for gear selection. This is also possible due to the fact that the control of one position for gear selection is accomplished by the centring springs.

In addition, the disclosed arrangement allows a reduction of costs for the construction of various parts owing to the coaxial arrangement of the actuator relative to the gearbox control shaft, and to the possibility (not shown) of constructing the actuator integrally.

## Claims

1. An electro-hyraulic device for controlling gear selection in a motorcar servo-controlled gearbox having at least four positions for gear selection, of the type wherein delivery of a pressurised fluid to working chambers provided in an actuator for controlling the translation of a gearbox control shaft (2) is selectively controlled by on-off valves in response to signals coming from a control processing unit, characterised in that said actuator has only two control chambers (38, 52) controlled by only two three-way on-off solenoid valves (58, 60).

2. A device as claimed in claim 1, characterised in that each of said working chambers is individually connected to a three-way on-off solenoid valve.

3. A device as claimed in claim 1, characterised in that said solenoid valves are connected to a source of pressurised fluid.

4. A device as claimed in claim 1, characterised in that said actuator is disposed coaxial to the gearbox control shaft (2).

5. A device as claimed in claim 1, characterised in that said actuator is comprised of an outer body provided with an axial bore with first and second portions (26, 27) of different diameter in which a piston is slidably mounted, said piston having first (32), second (34) and third (40) lengths of different diameter, said working chambers being located at said first and third lengths.

6. A device as claimed in claims 4 and 5, characterised in that the actuator piston is formed integrally with the gearbox control shaft (2).

7. A device as claimed in claim 5, characterised in that said second length (34) is of larger diameter than that of said first length (32) and substantially equal to that of said first bore portion (26) of smaller diameter.

8. A device as claimed in claim 5, characterised in that said third length (40) is of larger diameter than that of said first length (32) and of smaller diameter than that of said second length (34), said third length (40) being partially surrounded by a second piston (44) of annular shaped cross section coaxially and slidably mounted thereon, the inner diameter of said second piston (44) being substantially equal to that of said third length (40), the outer diameter of said second piston being substantially equal to that of said second bore portion (27) of wider diameter in which said shaft (2) is free to translate.

FIG.1

EP 0 813 006 A2

FIG. 2

EP 0 813 006 A2

FIG.3

FIG.4

EP 0 813 006 A2

FIG.5

EP 0 813 006 A2